# EUROPEAN PATENT APPLICATION

(11) **EP 2 538 747 A1**
(43) Date of publication of application: **26.12.2012**
(21) Application number: 11762002.1
(22) Date of filing: 30.03.2011
(51) Int. Cl.: H04W 88/08

(54) **CONNECTION DEVICE AND METHOD BETWEEN BASE BAND UNIT AND REMOTE RADIO UNIT**

(30) Priority: 02.04.2010 CN 201010142322
(71) Applicant: ZTE Corporation, Shenzhen, Guangdong 518057 (CN)
(72) Inventor: GUO, Junfeng, Shenzhen Guangdong 518057 (CN); JIANG, Su, Shenzhen Guangdong 518057 (CN)
(74) Representative: Ilgart, Jean-Christophe
(86) International application number: PCT/CN2011/072283
(87) International publication number: WO 2011/120428

(57) **Abstract**

The present invention discloses a device and method for realizing a connection between a base band unit and a remote radio frequency unit, wherein the device comprises: a first transmission multiplexer configured to implement an optical transmission transceiving multiplex function of the base band unit; and a second transmission multiplexer configured to implement an optical transmission transceiving multiplex function of the remote radio frequency unit, wherein the first transmission multiplexer is connected with the second transmission multiplexer to enable the base band unit and the remote radio frequency unit to transmit data through the first transmission multiplexer and the second transmission multiplexer. The present invention realizes single-line data transmission between a base band unit and a remote radio frequency unit and improves the utilization rate of a transmission line.

## Description

### Field of the Invention

The present invention relates to a Time Division Duplexing (TDD) mobile communication system, and more particularly to a device and method for realizing a connection between a Base Band Unit (BBU) and a Remote Radio Unit (RRU).

### Background of the Invention

Time Division-Synchronous Code Division Multiple Access (TD-SCDMA), as one of the standards for the third generation mobile communication, is a mobile communication technology that develops vigorously in China. Distributed base station is an important component in a TD-SCDMA system. The distributed base station divides a conventional macro base station into a base band processing unit (BBU) and a remote radio processing unit (RRU), wherein the BBU and the RRU are connected with each other through an interface. Compared with the conventional base station, the base station structured like this enables the RRU to be closer to an antenna, thereby reducing the cable loss of a radio signal and lowering the construction difficulty on the connection of an antenna and a feeder cable.

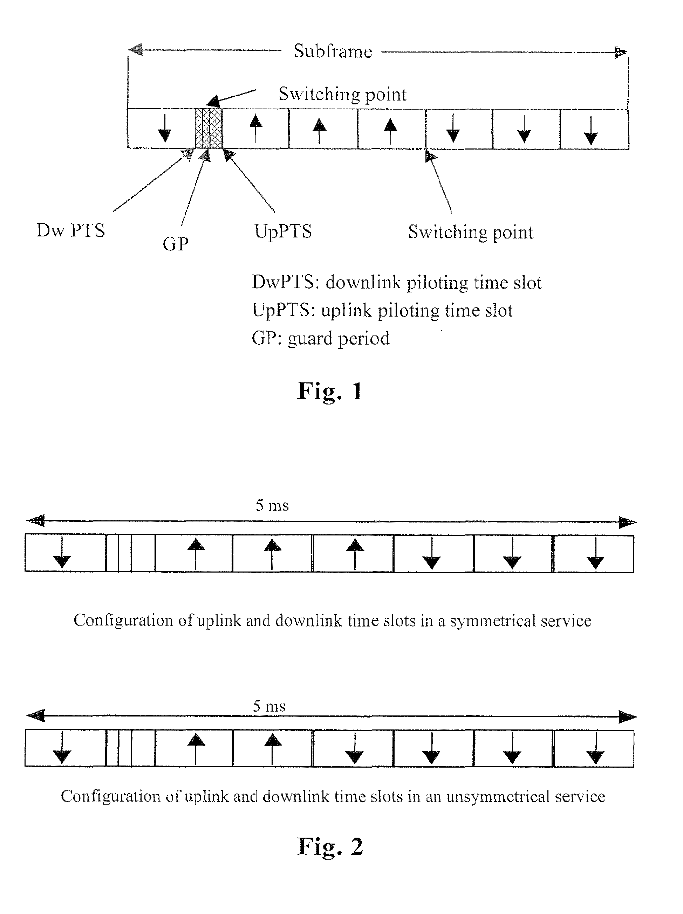

The interface used between the BBU and the RRU of a distributed base station for a TD-SCDMA system is specified in the industrial standard '2GHz TD-SCDMA Digital Cellular Mobile Telecommunication Network Technical Requirements of Ir Interface' issued by Ministry of Industry and Information Technology of the People's Republic of China and is referred to as Ir interface. The Ir interface makes use of the characteristics of a TDD frame structure of TD-SCDMA. The downlink time slot/uplink time slot of a currently idle Ir interface is used to transmit control signaling when an RRU is in a receiving/emitting state. Refer to Fig. 1 in which the frame structure of TD-SCDMA is illustrated, each 5ms is called a subframe, and each subframe is further divided into 8 time slots: 7 normal time slots and 1 special time slot, wherein the first time slot is referred to as TS0 and is always used in a downlink, the second one following TS0 is the special time slot that is mainly used for a cell synchronization and a random access, the third one to the eighth one are six normal time slots that are respectively referred to as TS1-TS6, wherein TS1 is always used in an uplink, and the configuration of the time slots TS2-TS6 is depended upon the specific data quantities of an uplink and a downlink. Fig. 2 shows two examples of the configuration of time slots in a symmetrical service and an unsymmetrical service.

The interface used between the BBU and the RRU of a distributed base station is specified in the 'Common Public Radio Interface (CPRI) Specification' formulated by the CPRI Organization and referred to as CPRI. A series of line rates comprising 614.4Mbps (1x), 1228.8Mbps (2x), 2457.6Mbps (4x), 3072.0Mbps (5x), 4915.2Mbps (8x), 6144.0Mbps (10x) and 9830.4Mbps (16x) are specified in the CPRI to meet transmission requirements in different standards or configurations.

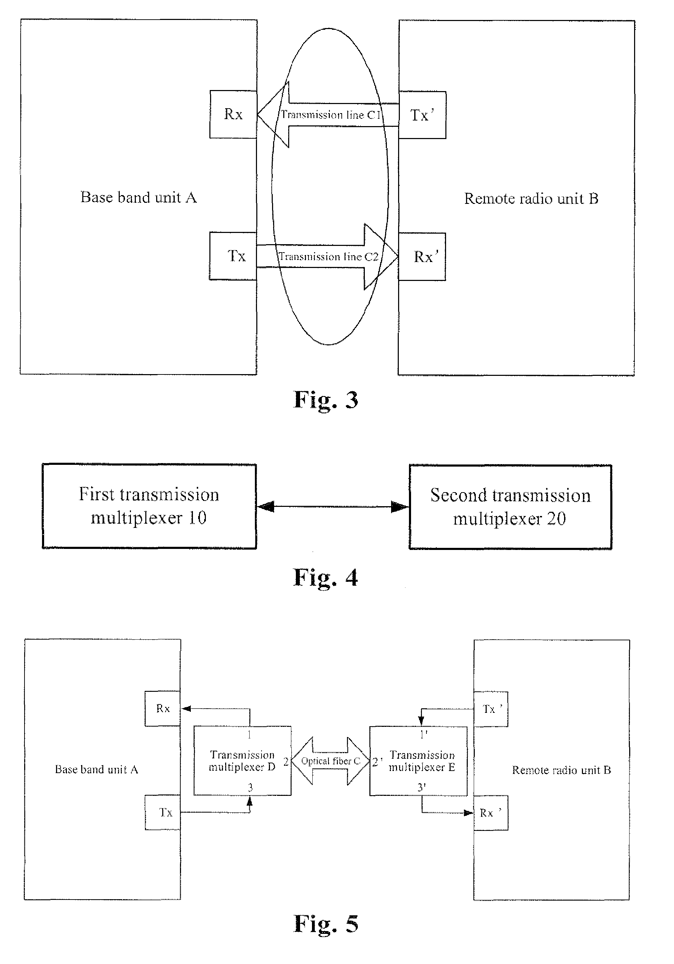

Fig. 3 shows a schematic diagram of the interface used between a BBU A and an RRU B of an existing TDD system. In an uplink direction, the RRU B transmits, by using a transmitter Tx' of an uplink interface channel, base band data of the uplink to the BBU A through an uplink transmission line C1; an uplink interface receiver RX of the BBU A receives the base band data of the uplink and then implements related processing. In a downlink direction, the BBU A transmits, by using a transmitter Tx of a downlink interface channel, base band data of the downlink to the RRU B through a downlink transmission line C2; a downlink interface receiver Rx' of the RRU B receives the base band data of the downlink and then implements related processing.

It can be concluded from the description above that the interface between a BBU and an RRU needs two independent transmission lines to respectively transmit uplink data and downlink data. As data cannot be transmitted in an uplink and a downlink of a TDD system synchronously, the uplink transmission line and the downlink transmission line of the interface between the BBU and the RRU are not fully used.

In conclusion, transmission resource is wasted and the construction and installation cost is high in the conventional art as two independent transmission lines are needed by the interface between a BBU and an RRU to transmit data, therefore, there is a need to propose an improved technical solution to address the problems above.

### Summary of the Invention

In view of the problem existing in the conventional art that the use of two independent transmission lines by the interface between a BBU and an RRU to transmit data leads to a waste in transmission resources as well as a high construction and installation cost, the present invention provides a device and method for realizing a connection between a base band unit and a remote radio frequency unit.

In accordance with an embodiment of the present invention, the device for realizing a connection between a BBU and an RRU comprises:
a first transmission multiplexer, configured to implement an optical transmission transceiving multiplex function of the BBU; and a second transmission multiplexer, configured to implement an optical transmission transceiving multiplex function of the RRU; wherein the first transmission multiplexer is connected with the second transmission multiplexer to enable the BBU and the RRU to transmit data through the first transmission multiplexer and the second transmission multiplexer.

Preferably, interface types of optical transmission interfaces of the BBU and the RRU comprise at least one of: Ir interface and common public radio interface.

Preferably, the first transmission multiplexer comprises: a first input port, configured to receive data sent from an interface transmitter of the BBU; a first input/output bidirectional interface, configured to send the data received by the first input port to the second transmission multiplexer, and receive data from the second transmission multiplexer; and a first output port, configured to send the data received by the first input/output bidirectional interface to an interface receiver of the BBU.

Preferably, the second transmission multiplexer comprises: a second input port, configured to receive data sent from an interface transmitter of the RRU; a second input/output bidirectional interface, configured to send the data received by the second input port to the first transmission multiplexer, and receive data from the first transmission multiplexer; and a second output port, configured to send the data received by the second input/output bidirectional interface to an interface receiver of the RRU.

Preferably, the first transmission multiplexer and the second transmission multiplexer are connected with each other through an optical fiber.

In accordance with an embodiment of the present invention, the method for realizing a connection between a BBU and an RRU comprises the steps of:
implementing an optical transmission transceiving multiplex function of the BBU using a first transmission multiplexer; implementing an optical transmission transceiving multiplex function of the RRU using a second transmission multiplexer; and connecting the first transmission multiplexer with the second transmission multiplexer to enable the BBU and the RRU to transmit data through the first transmission multiplexer and the second transmission multiplexer.

Preferably, interface types of optical transmission interfaces of the BBU and the RRU comprise at least one of: Ir interface and common public radio interface.

Preferably, the first transmission multiplexer comprises: a first input port, a first input/output bidirectional interface and a first output port, and the step of implementing the optical transmission transceiving multiplex function of the BBU using the first transmission multiplexer comprises the steps of: the first input port receiving data sent from an interface transmitter of the BBU; the first input/output bidirectional port sending the data received by the first input port to the second transmission multiplexer, and receiving data from the second transmission multiplexer; and the first output port sending the data received by the first input/output bidirectional interface to an interface receiver of the BBU.

Preferably, the second transmission multiplexer comprises: a second input port, a second input/output bidirectional interface and a second output port, and the step of implementing the optical transmission transceiving multiplex function of the RRU using the second transmission multiplexer comprises the steps of: the second input port receiving data sent from an interface transmitter of the RRU; the second input/output bidirectional port sending the data received by the second input port to the first transmission multiplexer, and receiving data from the first transmission multiplexer; and the second output port sending the data received by the second input/output bidirectional interface to an interface receiver of the RRU.

Preferably, the first transmission multiplexer and the second transmission multiplexer are connected with each other through an optical fiber.

Compared with the conventional art, the technical solution provided herein realizes single-line data transmission between a BBU and an RRU by arranging transmission multiplexers between the BBU and the RRU, thereby addressing the problem of transmission resource waste in the conventional art, and lowering construction and installation cost.

### Brief Description of the Drawings

Fig. 1 is a schematic diagram illustrating an existing TD-SCDMA frame structure;
Fig. 2 is a schematic diagram illustrating the configuration of uplink and downlink time slots in symmetrical and unsymmetrical services according to the conventional art;
Fig. 3 is a schematic diagram illustrating the dual-line transmission between a BBU and an RRU according to the conventional art;
Fig. 4 is a block diagram showing a device for realizing the connection between a BBU and an RRU according to an embodiment of the present invention;
Fig. 5 is a schematic diagram illustrating the single-line transmission between a BBU and an RRU according to an embodiment of the present invention; and
Fig. 6 is a flow chart of a method for realizing the connection between a BBU and an RRU according to an embodiment of the present invention.

### Detailed Description of the Embodiments

The basic idea of the embodiments of the present invention lies in that: by adding transmission multiplexers between a BBU and an RRU and connecting the transmission multiplexers with one optical fiber, single-line data transmission is realized between the BBU and the RRU (also referred to as radio remote unit) to reduce construction and installation cost. The technical solution provided herein is applicable to TDD mobile communication systems such as TD-SCDMA, Time Division-Long Term Evolution (TD-LTE) and World Interoperability for Microwave Access (WiMAX).

In order to provide a better understanding of the objects, the technical solution and the advantages of the present invention, the present invention is described below in detail with reference to embodiments in conjunction with accompanying drawings.

In accordance with an embodiment of the present invention, there is provided a device for realizing a connection between a BBU and an RRU.

Fig. 4 is a block diagram showing a device for realizing the connection between a BBU and an RRU according to an embodiment of the present invention, as shown in Fig. 4, the device comprises:
a first transmission multiplexer 10 configured to implement an optical transmission transceiving multiplex function of the BBU; and a second transmission multiplexer 20 configured to implement an optical transmission transceiving multiplex function of the RRU, wherein the first transmission multiplexer 10 is connected with the second transmission multiplexer 20 to enable the BBU and the RRU to transmit data through the first transmission multiplexer 10 and the second transmission multiplexer 20.

The interface type of the optical transmission interface between the BBU and the RRU may be an Ir interface or a CPRI, and the following description is given by taking an Ir interface as an example.

In accordance with an embodiment of the present invention, the first transmission multiplexer 10 is connected with the Ir interface of the BBU, and the second transmission multiplexer 20 is connected with the Ir interface of the RRU.

Fig. 5 is a schematic diagram illustrating the single-line transmission between a BBU and an RRU according to an embodiment of the present invention. Refer to Fig. 5, a transmission multiplexer D (that is, the first transmission multiplexer) comprises three I/O (Input/Output) ports, respectively being port 1, port 2 and port 3, wherein port 1 is an output port (that is, the first output port), port 2 is an input/output bidirectional port (that is, the first input/output bidirectional port), and port 3 is an input port (that is, the first input port).

A transmission multiplexer E (that is, the second transmission multiplexer) comprises three I/O ports, respectively being port 1', port 2' and port 3', wherein port 1' is an input port (that is, the second input port), port 2' is an input/output bidirectional port (that is, the second input/output bidirectional port), and port 3' is an output port (that is, the second output port).

In the transmission multiplexer D, port 1 is connected with an Ir interface receiver Rx of the BBU A and port 3 is connected with an Ir interface transmitter Tx of the BBU A. In the transmission multiplexer E, port 1' is connected with an Ir interface transmitter Tx' of the RRU B and port 3' is connected with an Ir interface receiver Rx' of the RRU B. Port 2 of the transmission multiplexer D is connected with port 2' of the transmission multiplexer E by a transmission line C (one optical fiber).

In the uplink direction, the RRU B sends the base band data of the uplink to the transmission multiplexer E using the transmitter Tx' of an uplink interface channel, the data pass through the transmission multiplexer E and then the data are sent to the BBU A through the transmission line C, and subsequently, the uplink interface receiver Rx of the BBU A receives the base band data of the uplink from the transmission multiplexer D. Specifically, the Ir interface transmission in the uplink direction comprises the following steps:
(1) the RRU B sends an uplink base band IQ signal to port 1' of the transmission multiplexer E through port Tx';
(2) the transmission multiplexer E sends the base band IQ signal received by port 1' to the optical fiber C through port 2';
(3) the optical fiber C transmits the base band IQ signal to port 2 of the transmission multiplexer D;
(4) port 2 of the transmission multiplexer D sends the received base band IQ signal to port 1 of the transmission multiplexer D;
(5) port 1 of the transmission multiplexer D sends the base band IQ signal to the Ir interface receiver Rx of the BBU A.

In the downlink direction, the BBU A sends base band data of the downlink to the transmission multiplexer D using the transmitter Tx of a downlink interface channel, the data pass through the transmission multiplexer D and then the data are sent to the RRU B through the transmission line C, and subsequently, the downlink interface receiver Rx' of the RRU B receives the base band data of the downlink from the transmission multiplexer E. Specifically, the Ir interface transmission in the downlink direction comprises the following steps:
(1) the BBU A sends a downlink base band IQ signal to port 3 of the transmission multiplexer D through port Tx;
(2) the transmission multiplexer D sends the base band IQ signal received by port 3 to the optical fiber C through port 2;
(3) the optical fiber C transmits the base band IQ signal to port 2' of the transmission multiplexer E;
(4) port 2' of the transmission multiplexer E sends the received base band IQ signal to port 3' of the transmission multiplexer E;
(5) port 3' of the transmission multiplexer E sends the base band IQ signal to the Ir interface receiver Rx' of the RRU B.

The foregoing description is given by taking the use of an Ir interface as an example, however, the present invention is not limited to this, the optical transmission interface between the BBU and the RRU may also be a CPRI that is not described herein.

The connection device described herein may be arranged between the BBU and the RRU as an independent device and can also be set flexibly in actual applications, for instance, the first transmission multiplexer 10 may be integrated with the BBU, and the transmission multiplexer 20 may be integrated with the RRU.

In conclusion, in accordance with the embodiments above, the two transmission lines used between a BBU and an RRU in the conventional art is replaced by a single transmission line without modifying the operation flow of existing interfaces, thus lowering the cost.

In accordance with an embodiment of the present invention, there is also provided a method for realizing the connection between a BBU and an RRU, wherein the interface type of the optical transmission interface of the BBU and the RRU may be an Ir interface or CPRI.

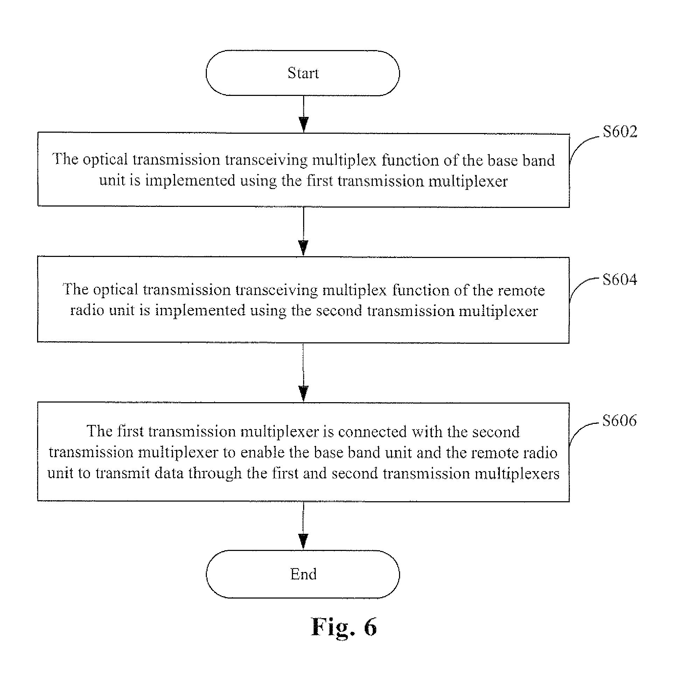

Fig. 6 is a flow chart of a method for realizing the connection between a BBU and an RRU according to an embodiment of the present invention, as shown in Fig. 6, the method comprises the following Steps S602-S606.

Step S602: the optical transmission transceiving multiplex function of the BBU is implemented using a first transmission multiplexer.

The first transmission multiplexer comprises: a first input port, a first input/output bidirectional interface and a first output port, and Step S602 specifically comprises the following steps: the first input port receives the data sent from the interface transmitter of the BBU; the first input/output bidirectional port sends the data received by the first input port to the second transmission multiplexer and receives data from the second transmission multiplexer; and the first output port sends the data received by the first input/output bidirectional interface to the interface receiver of the BBU.

Step S604: the optical transmission transceiving multiplex function of the RRU is implemented using the second transmission multiplexer.

The second transmission multiplexer comprises: a second input port, a second input/output bidirectional interface and a second output port, and Step S604 specifically comprises the following steps: the second input port receives the data sent from the interface transmitter of the RRU; the second input/output bidirectional port sends the data received from the second input port to the first transmission multiplexer and receives data from the first transmission multiplexer; and the second output port sends the data received by the second input/output bidirectional interface to the interface receiver of the RRU.

Step S606: the first transmission multiplexer is connected with the second transmission multiplexer to enable the BBU and the RRU to transmit data through the first and second transmission multiplexers. Specifically, the first and second transmission multiplexers are connected with each other through one optical fiber.

In conclusion, in accordance with the technical solution provided herein, a single-line data transmission is realized between a BBU and an RRU by arranging transmission multiplexers between the BBU and the RRU, thus addressing the problem of transmission resource waste existing in the conventional art, improving the utilization rate of the transmission line and lowering device deployment cost and engineering installation cost for operators.

The descriptions above are only the embodiments of the present invention, which are not used to restrict the present invention. For those skilled in the art, the present invention may have various changes and variations. Any amendments, equivalent substitutions, improvements, etc. within the principle of the present invention are all included in the scope of the protection of the present invention.

## Claims

1. A device for realizing a connection between a base band unit (BBU) and a remote radio unit (RRU), **characterized by** comprising:
a first transmission multiplexer, configured to implement an optical transmission transceiving multiplex function of the BBU; and
a second transmission multiplexer, configured to implement an optical transmission transceiving multiplex function of the RRU;
wherein the first transmission multiplexer is connected with the second transmission multiplexer to enable the BBU and the RRU to transmit data through the first transmission multiplexer and the second transmission multiplexer.

2. The device according to claim 1, **characterized in that** interface types of optical transmission interfaces of the BBU and the RRU comprise at least one of:
Ir interface and common public radio interface.

3. The device according to claim 1, **characterized in that** the first transmission multiplexer comprises:
a first input port, configured to receive data sent from an interface transmitter of the BBU;
a first input/output bidirectional interface, configured to send the data received by the first input port to the second transmission multiplexer, and receive data from the second transmission multiplexer; and
a first output port, configured to send the data received by the first input/output bidirectional interface to an interface receiver of the BBU.

4. The device according to claim 1, **characterized in that** the second transmission multiplexer comprises:
a second input port, configured to receive data sent from an interface transmitter of the RRU;
a second input/output bidirectional interface, configured to send the data received by the second input port to the first transmission multiplexer, and receive data from the first transmission multiplexer; and
a second output port, configured to send the data received by the second input/output bidirectional interface to an interface receiver of the RRU.

5. The device according to claim 1, **characterized in that** the first transmission multiplexer and the second transmission multiplexer are connected with each other through an optical fiber.

6. A method for realizing a connection between a base band unit (BBU) and a remote radio unit (RRU), **characterized by** comprising the steps of:
implementing an optical transmission transceiving multiplex function of the BBU using a first transmission multiplexer;
implementing an optical transmission transceiving multiplex function of the RRU using a second transmission multiplexer; and
connecting the first transmission multiplexer with the second transmission multiplexer to enable the BBU and the RRU to transmit data through the first transmission multiplexer and the second transmission multiplexer.

7. The method according to claim 6, **characterized in that** interface types of optical transmission interfaces of the BBU and the RRU comprise at least one of:
Ir interface and common public radio interface.

8. The method according to claim 6, **characterized in that** the first transmission multiplexer comprises: a first input port, a first input/output bidirectional interface and a first output port, and the step of implementing the optical transmission transceiving multiplex function of the BBU using the first transmission multiplexer comprises the steps of:
the first input port receiving data sent from an interface transmitter of the BBU;
the first input/output bidirectional port sending the data received by the first input port to the second transmission multiplexer, and receiving data from the second transmission multiplexer; and
the first output port sending the data received by the first input/output bidirectional interface to an interface receiver of the BBU.

9. The method according to claim 6, **characterized in that** the second transmission multiplexer comprises: a second input port, a second input/output bidirectional interface and a second output port, and the step of implementing the optical transmission transceiving multiplex function of the RRU using the second transmission multiplexer comprises the steps of:
the second input port receiving data sent from an interface transmitter of the RRU;
the second input/output bidirectional port sending the data received by the second input port to the first transmission multiplexer, and receiving data from the first transmission multiplexer; and
the second output port sending the data received by the second input/output bidirectional interface to an interface receiver of the RRU.

10. The device according to claim 6, **characterized in that** the first transmission multiplexer and the second transmission multiplexer are connected with each other through an optical fiber.
